# EUROPEAN PATENT SPECIFICATION

(11) **EP 3 056 525 B1**
(45) Date of publication and mention of the grant of the patent: **17.05.2017**
(21) Application number: 16155891.1
(22) Date of filing: 16.02.2016
(51) Int. Cl.: C08F 230/02, C04B 24/24

(54) **A POLYMERIC ADMIXTURE FOR SUSPENSIONS**
POLYMERES ZUSATZMITTEL FÜR SUSPENSIONEN
MÉLANGE DE POLYMÈRE POUR SUSPENSIONS

(30) Priority: 16.02.2015 EP 15155210
(43) Date of publication of application: 17.08.2016
(73) Proprietor: Sabanci Üniversitesi, 34956 Istanbul (TR)
(72) Inventor: AKHLAGHI, Omid, 34956 Istanbul (TR); AKBULUT, Özge, 34956 Istanbul (TR); MENCELOGLU, Yusuf Z., 34956 Istanbul (TR)
(74) Representative: Sevinç, Erkan

(56) References cited:
- WO-A1-2007/026936
- WO-A1-2014/075996
- US-A1- 2003 120 027

## Description

### Technical Field of the Invention

The present invention relates to a polymeric admixture for suspensions, and a preparation method thereof. In particular, the present invention concerns with calcium aluminate cement (CAC) compatible admixtures for provision of enhanced flowability and slump retaining to its suspensions. The present invention further provides a production method for such polymeric admixture.

### Background of the Invention

Various approaches have been developed to improve the performance of PCEs with respect to water reduction, slump flow, and cement compatibility.

Calcium aluminate cement (CAC) is a versatile special cement that is used in high performance applications such as those requiring high early strength and refractoriness (Ukrainczyk and Matusinović, Cement and Concrete Research, 40 (2010) 128-136) or applications in environments with likelihood of severe chemical attack and severe abrasion (Ukrainczyk, Chemical Engineering Science, 65 (2010) 5605-5614). Practical experience has shown that long-term durability of hardened CAC necessitates water/cement weight ratios (w/c) of lower than 0.4 (Scrivener et a/., Cement and Concrete Research, 29 (1999) 1215-1223).

In order to lower the w/c and also keep the necessary fluidity (fluidity retention) at the same time, utilization of superplasticizers is inevitable (Büyükyaǧc 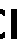 *et al.,* Cement and Concrete Research, 39 (2009) 629-635). Among all types of superplasticizers, polycarboxylate ether-based superplasticizers (PCEs) have been found to be efficient in the preparation of high performance concrete by sharply reducing the amount of mixing water, namely up to 40%.

Achieving sharp decline in w/c and simultaneously achieving high initial workability and fluidity retention are conditional on the compatibility between the admixture and the cement (Burgos-Montes et al., Construction and Building Materials, 31 (2012) 300-309).

In practice, certain PCEs occasionally generate undesirable behaviors such as paste segregation and low initial workability or early loss of workability (Scrivener et al., Cement and Concrete Research, 29 (1999) 1215-1223). High initial fluidity and high workability retention in CAC is a matter to be achieved only by delicate interplay between chemical structure and adsorption behavior of the PCEs.WO2014/075996 discloses polymers of α, β-unsaturated carboxylic acids with polyoxyalkylene side chains that have been used in concrete technology as dispersing agents, in particular as plasticizers. US2003120027 discloses anionic copolymers and their use in cement or concrete preparations. WO2007026936 discloses dispersants to be used in ultrarapid hardening calcium aluminate cement compositions. Yet, the prior art disclosures fail to provide PCEs with high performance in terms of fluidity, initial workability, slump retention, slump flow along with water reduction and cement compatibility; and also a method for obtainment of such PCEs.

### Objects of the Invention

Primary object of the present invention is to overcome the abovementioned shortcomings of the prior art.

Another object of present invention is obtainment of a polymeric admixture which enables incorporation of high solid content in CAC suspensions while maintaining initial workability and fluidity retention of such suspensions.

Yet another object of the present invention is to provide a simple, cost-effective, and environmentally friendly production method of such polymeric admixture.

### Summary of the Invention

The present invention proposes a polycarboxylate ether-based polymeric admixture for use as flow modifier in suspensions as depicted in the claims. The present invention further proposes a method for obtainment of such polymeric admixture, wherein the method comprises free radical polymerization in a mixture comprising acrylic acid (AA), vinyl phosphonic acid (VPA), and maleic anhydride ester of polyethylene glycol (PEGMA) as reactants, said mixture further comprising water and an initiator; said mixture having an initial pH value within the range between 7.5 and 8.5; wherein any free oxygen is removed from the mixture throughout the free radical polymerization.

### Brief Description of the Figure

The figure, whose brief explanation is herewith provided, is solely intended for providing a better understanding of the present invention and is as such not intended to define the scope of protection or the context in which said scope is to be interpreted in the absence of the description.

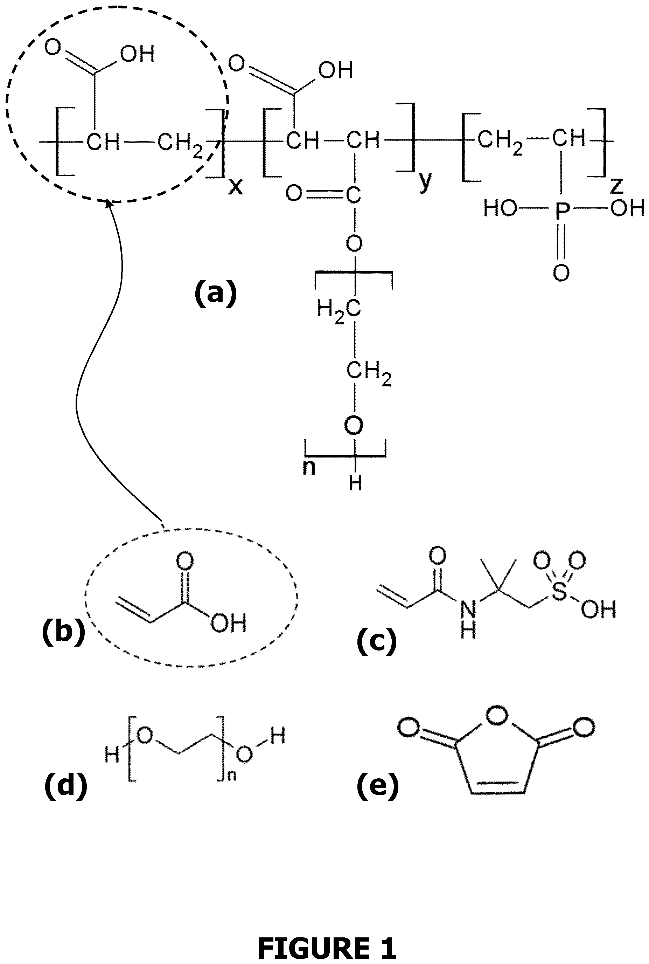

Figure 1 shows chemical formulas of (a) the PCEs according to the present invention, (b) acrylic acid, (c) vinyl phosphonic acid, (d) poly ethylene glycol, and (e) maleic anhydride.

### Detailed Description of the Invention

Referring now the figure outlined before, the present invention proposes a polymeric admixture providing high initial workability and fluidity retention to CAC suspensions, and a preparation method of such polymeric admixture.

Preparation and characterization of a high-performance modified PCEs comprising acrylic acid (AA), vinyl phosphonic acid (VPA), polyethylene glycol (PEG), and maleic anhydride (MA) are performed.

The present invention provides a high performance modified PCEs having the general formula (I) (shown in Fig. 1 (a)). The PCEs according to the present invention includes acrylic acid (chemical formula of which is shown in Fig. 1(b)), vinyl phosphonic acid (VPA) (chemical formula of which is shown in Fig. 1(c)), poly ethylene glycol (PEG) (chemical formula of which is shown in Fig. 1(d)), and maleic anhydride (MA) (chemical formula of which is shown in Fig. 1(e)). In formula (I), x is an integer value between 25 and 75, y is an integer value between 1 and 3, z is an integer value between 25 and 75, and n is an integer value between 23 and 46.

A mixture preferably comprising at least 90% (w/w) polycarboxylate ether-based polymeric admixture (PCEs) according to the above definition with respect to the total weight of said mixture can also be called as polymeric admixture according to the present invention.

The inventors observed that said values of x, y, z, and n correspond to favorable molecular weights of the PCEs according to the present invention to result in higher initial workability and fluidity retention in comparison with the superplasticizers of the state of the art (several commercially available superplasticizers).

The present invention further proposes a method for obtainment of polycarboxylate ether-based polymeric admixture for use in suspensions, in particular for use in CAC suspensions, wherein the method comprises the step of:
(b) free radical polymerization in a mixture comprising acrylic acid (AA), vinyl phosphonic acid (VPA) and maleic anhydride ester of polyethylene glycol (PEGMA) as reactants, said mixture further comprising water and an initiator; said mixture having an initial pH value within the range between 7.5 and 8.5, preferably between 7.8 and 8.2; and any free oxygen is removed from the mixture throughout the free radical polymerization.

Obtainment of PEGMA used in the step (b) can be preferably included as an earlier step (a) to be performed prior to the step (b), realized by esterification of polyethylene glycol (PEG) with maleic anhydride (MA). Throughout the step (a), the reaction medium must to be kept under nitrogen.

The esterification in the step (a) is preferably performed with about equimolar initial amounts of PEG and MA. The molar ratio of PEG to MA should be strictly controlled and must be kept between 1:0.9 and 1:1.1, more preferably between 1:0.95 and 1:1.05, most preferably 1:1 for provision of favourable stoichiometry.

In a preferred embodiment according to the method of the present invention, the esterification in the step (a) is preferably performed for at least 120 minutes, preferably for a time interval ranging between 150 minutes and 240 minutes and with a reactor temperature within the range between 70 °C and 110 °C, preferably within the range between 80 °C and 100 °C. Then the reaction medium is cooled down, preferably to room temperature.

In a preferred embodiment of the method according to the present invention, the step (b) comprises following sequential steps:
i. stirring a mixture comprising water, acrylic acid (AA), vinyl phosphonic acid (VPA), and maleic anhydride ester of polyethylene glycol (PEGMA) for a first time interval ranging between 20 and 50 minutes, preferably between 25 and 35 minutes, more preferably between 28 minutes and 32 minutes, along with removal of any free oxygen from the mixture, preferably by purging the mixture with nitrogen,
ii. controlled addition of a first portion of an initiator into the reactor; and maintaining the reactor temperature within a range between 45 °C and 56 °C, preferably between 48 °C and 53 °C for a second time interval ranging between 40 minutes and 60 minutes, preferably between 45 minutes and 55 minutes, more preferably between 48 minutes and 52 minutes,
iii. controlled addition of a second portion of initiator into the reactor; raising the reactor temperature to a range between 55 °C and 65 °C, preferably between 57 °C and 62 °C, and maintaining the reactor temperature within said range for a third time interval ranging between 65 minutes and 90 minutes, preferably between 70 minutes and 85 minutes, more preferably between 70 minutes to 80 minutes,
iv. raising the reactor temperature to a range between 70 °C and 90 °C, preferably between 75 °C and 90 °C, and maintaining the reactor temperature within said range for a fourth time interval of 3 days or more, preferably up to 6 days, more preferably said time interval is between 3.5 days and 4 days.

The controlled addition of initiator in the steps (ii) and (iii) are to be arranged such that at the end of the addition the maximum amount of the initiator is between 0.5 wt.% and 1.5 wt.%, and preferably between 0.75 wt.% and 1.25 wt.% with respect to the total mass of the reactants.

The controlled addition of initiator in at least one of step (ii) and step (iii) is preferably performed throughout a time interval within the range between 4 minutes and 8 minutes, and more preferably within the range between 4.5 minutes and 6 minutes.

It is preferable to use a reflux condenser attached to the reactor, or the reaction is preferably conducted with a negligibly small head space. The head space preferably corresponds to a maximum of 2% of the total volume of the reactor.

Preferably, the initial pH value is within the range between 7.8 and 8.2, since as explained above, most favorable polycarboxylate ether-based polymeric admixture is obtained with the initial pH value within said range.

The total reactants content in the mixture of step (b) is preferably between 10 wt.% and 20 wt.%, and more preferably between 12 wt.% and 18 wt.% with respect to the total weight of the reaction mixture.

Preferably, the mixture of step (b) initially comprises 19 to 21 moles of AA and 29 to 31 moles of VPA per each mol of PEGMA. Best results are obtained AA/VPA/PEGMA moles ratio of 20/30/1 at pH=8.

Preferably, the initiator comprises one or more inorganic peroxide selected from the list consisting of potassium persulfate (KPS), ammonium persulfate, sodium persulfate, and hydroxymethane sulfinic acid monosodium salt dehydrate or a mixture thereof. The initiator is used at a mass concentration within the range between 0.5 wt.% and 1.5 wt.%, preferably within the range between 0.75 wt.% and 1.25 wt.% with regard to the mass of the reactants in the mixture.

In a preferred embodiment of the method according to the present invention, the controlled addition of the initiator in at least one of step (ii) and step (iii) is performed throughout a time interval within the range between 4 minutes and 8 minutes, and more preferably within the range between 4.5 minutes and 6 minutes.

For achieving a highly favorable molecular weight in the polycarboxylate ether-based polymeric admixture obtained with the method according to the present invention, preferably, the first time interval ranges between 28 and 32 minutes, the second time interval ranges between 47 and 52 minutes, the third time interval ranges between 70 and 80 minutes, and the fourth time interval ranges between 3 and 6 days.

Preferably, the removal of free oxygen is performed by sweeping with an inert gas, preferably with nitrogen.

An exemplary lab-scale obtainment of PCEs according to the method of the present invention is described below in detail. By giving said example, it is solely intended to provide a better understanding of the present invention and is as such not intended to limit the scope of the appended claims.

### EXAM PLE

### Synthesis of PCEs-based copolymer:

Step-a) Equimolar amounts of PEG and MA were charged into a 250 ml three neck flask and then heated up to 90 °C. The reaction medium was kept under nitrogen for 2 hours; then, cooled to room temperature. The reaction product which is esterified PEG (hereafter referred to as PEGMA), was used for the further steps without any purification.

For a typical aqueous free radical polymerization, aqueous solutions of reactants (AA, VPA, and PEGMA) with various molar ratios of reactants were prepared, each in 110 ml of deionized water. The preferable total reactants content in the aqueous mixture is between 10 wt.% to 20 wt.%, and more preferably between 12 wt.% to 18 wt.%, even more preferably about 15 wt.%, most preferably 15 wt.% with respect to the total weight of said aqueous mixture.

Subsequently, pH of the mixture was adjusted to a certain value (which being kept around respective values with +/- 0.2 tolerance range), by using aqueous solutions of NaOH and HCl. Then the mixture was charged into a reactor (a three neck flask connected to a reflux condenser). Nitrogen was used for removal of free oxygen throughout the reaction. After 30 min, the reactor was heated up to 50 °C and a first portion of initiator (aqueous solution of KPS) was dropwise added to the reactor. Said addition is completed at the end of 5 minutes and at the end of this 5 minutes, the solution contained 1 wt.% KPS compared to the total mass of reactants. This concentration of KPS is chosen, since higher concentrations such as 2-4 wt.% KPS in earlier trials resulted in low molecular weight polymers as products, and these products did not have any favorable effect on cement flowability.

The initiator used in the example is an aqueous solution of potassium persulfate (KPS), yet it is worth noting that the scope of the present invention is not limited to KPS, and any free radical polymerization initiator which potentially produce comparable results (i.e., which initiates the reaction for production of polycarboxylate ether-based polymeric admixture from the reactants) must still be considered within the scope of the present invention. Thus, preferably, the initiator comprises an inorganic peroxide selected from the list consisting of (NH₄)₂S₂O₈ (ammonium persulfate), HOCH₂SO₂Na.2H₂0 (hydroxymethane sulfinic acid monosodium salt dihydrate), K₂S₂O₈ (potassium persulfate), NA₂S₂O₈ (sodium persulfate), or a mixture thereof.

50 minutes later than the abovementioned addition of KPS, the reactor temperature was raised to 60 °C and a second portion of initiator (KPS) was added to the reaction medium, and the reaction temperature was maintained for another 75 minutes. Then, temperature was increased to 80 °C and the reaction continued for the following 4 days.

Finally, the reactor was cooled down to room temperature.

Allyl ether, polyethylene glycol esterified by acrylic acid, maleic anhydride and other unsaturated monomer were used in an aqueous solution in free-radical copolymerization for preparation of comparative PCEs. Although addition of these admixtures enhances fluidity of CAC suspensions, poor fluidity retention (∼ 15 min) indicates the incompatibility between the PCEs and CAC. The modified PCEs according to the present invention exhibits favorable properties in terms of fluidity, slump retention, slump flow, water reduction, and cement compatibility.

The inventors have decided that most favorable initial AA/VPA/PEGMA molar ratios within the reaction mixture of the method according to the present invention are such that the initial reaction mixture comprises 19 to 21 moles of AA and 29 to 31 moles of VPA per each mol of PEGMA, when the PCEs is synthesized at a pH value within the range between 7.5 to 8.5. In terms of flow performance along with workability, most favourable result is obtained at initial AA/VPA/PEGMA molar ratios of 20/30/1, when the reaction medium for PCEs synthesis is kept at a pH value of 8±0.2.

The present invention discloses a simple method for synthesis of high performance PCEs. Without requiring any chain transfer agent or complex initiator system, molecular weight of the polymeric admixture is controlled by pre-adjustment of pH level of the polymerization medium. Since the pH level of the desired final product is between 7 and 8, neutralizing step at the end of the process is eliminated. Initial reaction medium contains all the reactants, therefore the process is easy to conduct by elimination of necessity of gradual addition of monomers throughout the reaction. Furthermore, addition of the initiator is facilitated by limiting to two parts; at the beginning and in the middle of the reaction, instead of gradual or dropwise addition throughout the reaction as performed in the prior art. As described above, with the production method according to the present invention, the desired products are obtained with simplified procedures. Thus, the method according to the present invention is simple and cost-effective. Furthermore, the method according to the present invention can be considered as environmentally friendly.

Thus the following objects are achieved by the present invention:
- overcoming the abovementioned shortcomings of the prior art,
- provision of:
   - a polymeric admixture which enables incorporation of high solid content in CAC suspensions while maintaining initial workability and fluidity retention of such suspensions,
   - a simple, cost-effective, and environmentally friendly production method of such polymeric admixture.

## Claims

1. A polycarboxylate ether-based polymeric admixture (PCEs) having the general formula (I) for use in suspensions, 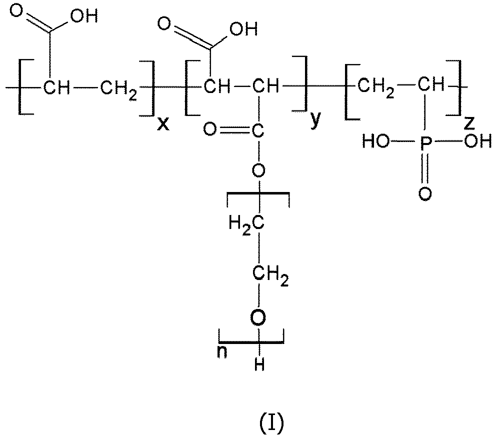 wherein x is an integer value between 25 and 75, y is an integer value between 1 and 3, z is an integer value between 25 and 75, and n is an integer value between 23 and 46.

2. Mixture comprising polycarboxylate ether-based polymeric admixture according to the Claim 1.

3. Use of mixture according to any of the claims 1 or 2 in cement suspensions, in particular in calcium aluminate cements (CACs).

4. A method for obtainment of a polycarboxylate ether-based polymeric admixture for use in suspensions, wherein the method comprises the step of:
b) free radical polymerization in a mixture comprising acrylic acid (AA), vinyl phosphonic acid (VPA), and maleic anhydride ester of polyethylene glycol (PEGMA) as reactants, said mixture further comprising water and an initiator; said mixture having an initial pH value within the range between 7.5 and 8.5; wherein any free oxygen is removed from the mixture throughout the free radical polymerization.

5. Method according to the Claim 4, wherein the step (b) comprises following sequential steps:
i. stirring upon preparation of a mixture comprising water, AA, VPA, and PEGMA for a first time interval ranging between 20 and 50 minutes, along with removal of any free oxygen from the mixture,
ii. controlled addition of a first portion of initiator into the reactor, and raising the reactor temperature to a range between 45 °C and 56 °C and maintaining the reactor temperature within said range for a second time interval ranging between 40 and 60 minutes,
iii. controlled addition of a second portion of initiator into the reactor; raising the reactor temperature to a range between 55 °C and 65 °C and maintaining the reactor temperature within said range for a third time interval ranging between 65 and 90 minutes,
iv. raising the reactor temperature to a range between 70 °C and 90 °C and maintaining the reactor temperature within said range for a fourth time interval ranging between 3 days or more.
wherein the amounts of initiator added in the steps (ii) and (iii) are arranged such that at the end of the addition the maximum amount of the initiator is between 0.5 wt.% and 1.5 wt.% with respect to the total mass of the reactants.

6. Method according to any one of the Claims 4 or 5, wherein the initial pH value is within the range between 7.8 and 8.2.

7. Method according to any one of the Claims 4 to 6, wherein a step (a) is performed prior to the step (b), said step (a) including esterification of polyethylene glycol (PEG) with maleic anhydride (MA) by reacting PEG and MA in about equimolar initial amounts in a reaction medium, wherein the reaction medium is kept under nitrogen throughout the reaction.

8. Method according to the Claim 7, wherein the esterification in the step (a) is performed for at least 120 minutes and preferably for a time interval ranging between 150 minutes and 240 minutes; at a reactor temperature within the range between 70 °C and 110 °C and preferably within the range between 80 °C and 100 °C.

9. Method according to any one of the Claims 4 to 8, wherein the total reactants content in the mixture of step (b) is between 10 wt.% and 20 wt.%, and preferably between 12 wt.% and 18 wt.% with respect to the total weight of the reaction mixture.

10. Method according to any one of the Claims 4 to 9, wherein the mixture of step (b) initially comprises 19 to 21 moles of AA and 29 to 31 moles of VPA per each mol of PEGMA, and the pH of the reaction medium is kept at a pH value of 8±0.2.

11. Method according to any one of the Claims 4 to 10, wherein the initiator of step (b) comprises an inorganic peroxide selected from the list consisting of ammonium persulfate, potassium persulfate (KPS), sodium persulfate, hydroxymethane sulfinic acid monosodium salt dehydrate or a mixture thereof.

12. Method according to any of the Claims 4 to 11, wherein the initiator is used at a mass concentration within the range between 0.75 wt.% and 1.25 wt.% with regard to the mass of the reactants in the mixture.

13. Method according to the Claim 5, wherein the controlled addition of the initiator in at least one of step (ii) and step (iii) is performed throughout a time interval within the range between 4 minutes and 8 minutes, and preferably within the range between 4.5 minutes and 6 minutes.

14. Method according to the Claim 5, wherein the first time interval ranges between 25 minutes and 35 minutes and preferably between 28 minutes and 32 minutes; the second time interval ranges between 45 minutes and 55 minutes and preferably between 48 minutes and 52 minutes; the third time interval ranges between 70 minutes and 85 minutes and preferably between 70 minutes and 80 minutes; the fourth time interval ranges between 3 days and 6 days and preferably between 3.5 days and 4 days.

15. Method according to any one of the Claims 4 to 14, wherein the removal of free oxygen is performed by sweeping with an inert gas, preferably with nitrogen.

## Patentansprüche

1. Ein Polycarboxylatether-basiertes polymeres Zusatzmittel (PCEs) mit der allgemeinen Formel (I) zur Verwendung in Suspensionen, 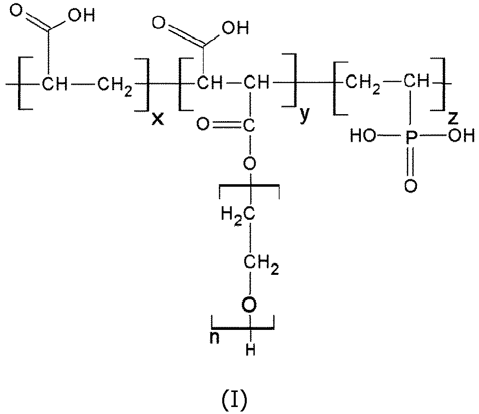 wobei x eine ganze Zahl zwischen 25 und 75 ist, y eine ganze Zahl zwischen 1 und 3 ist, z eine ganze Zahl zwischen 25 und 75 ist und n eine ganze Zahl zwischen 23 und 46 ist.

2. Gemisch, umfassend ein Polycarboxylatether-basiertes polymeres Zusatzmittel gemäß Anspruch 1.

3. Verwendung eines Gemisches gemäß einem der Ansprüche 1 oder 2 in Zementsuspensionen, insbesondere in Calciumaluminat-Zementen (CACs).

4. Ein Verfahren zum Erhalt eines Polycarboxylatether-basierten polymeren Zusatzmittels zur Verwendung in Suspensionen, wobei das Verfahren den Schritt umfasst:
b) freie radikalische Polymerisation in einem Gemisch umfassend Acrylsäure (AA), Vinylphosphonsäure (VPA) und Polyethylenglycol-Maleinsäureanhydrid-Ester (PEGMA) als Reaktanten, wobei besagtes Gemisch außerdem Wasser und einen Initiator umfasst; wobei besagtes Gemisch einen anfänglichen pH-Wert innerhalb des Bereichs zwischen 7,5 und 8,5 besitzt; wobei jeglicher freie Sauerstoff aus dem Gemisch während der freien radikalischen Polymerisation entfernt ist.

5. Verfahren gemäß Anspruch 4, wobei Schritt (b) die folgenden aufeinanderfolgenden Schritte umfasst:
i. Rühren nach Herstellung eines Gemisches, umfassend Wasser, AA, VPA und PEGMA, über einen ersten Zeitraum zwischen 20 und 50 Minuten zusammen mit der Entfernung jeglichen freien Sauerstoffs aus dem Gemisch,
ii. kontrollierte Zugabe eines ersten Teils an Initiator in den Reaktor und Erhöhung der Reaktortemperatur auf einen Bereich zwischen 45°C und 56°C und Aufrechterhaltung der Reaktortemperatur innerhalb besagten Bereichs über einen zweiten Zeitraum, der im Bereich zwischen 40 und 60 Minuten liegt,
iii. kontrollierte Zugabe eines zweiten Teils an Initiator in den Reaktor; Erhöhung der Reaktortemperatur auf einen Bereich zwischen 55°C und 65°C und Aufrechterhaltung der Reaktortemperatur innerhalb besagten Bereichs über einen dritten Zeitraum, der im Bereich zwischen 65 und 90 Minuten liegt,
iv. Erhöhung der Reaktortemperatur auf einen Bereich zwischen 70°C und 90°C und Aufrechterhaltung der Reaktortemperatur innerhalb besagten Bereichs über einen vierten Zeitraum, der im Bereich zwischen 3 oder mehr Tagen liegt,
wobei die Mengen an Initiator, die in den Schritten (ii) und (iii) zugegeben werden, so gewählt werden, dass am Ende der Zugabe die Maximalmenge des Initiators zwischen 0,5 Gew.-% und 1,5 Gew.-% bezogen auf die Gesamtmasse der Reaktanten beträgt.

6. Verfahren gemäß einem der Ansprüche 4 oder 5, wobei der anfängliche pH-Wert innerhalb des Bereichs zwischen 7,8 und 8,2 liegt.

7. Verfahren gemäß einem der Ansprüche 4 bis 6, wobei ein Schritt (a) vor dem Schritt (b) durchgeführt wird, wobei besagter Schritt (a) eine Veresterung von Polyethylenglycol (PEG) mit Maleinsäureanhydrid (MA) durch Reaktion von PEG und MA in etwa äquimolaren Anfangsmengen in einem Reaktionsmedium umfasst, wobei das Reaktionsmedium während der Reaktion unter Stickstoff gehalten wird.

8. Verfahren gemäß Anspruch 7, wobei die Veresterung in Schritt (a) wenigstens 120 Minuten und vorzugsweise über einen Zeitraum im Bereich zwischen 150 und 240 Minuten; bei einer Reaktortemperatur innerhalb des Bereichs zwischen 70°C und 110°C und vorzugsweise innerhalb des Bereichs zwischen 80°C und 100°C durchgeführt wird.

9. Verfahren gemäß einem der Ansprüche 4 bis 8, wobei der Gesamtgehalt an Reaktanten in dem Gemisch von Schritt (b) zwischen 10 Gew.-% und 20 Gew.-% und vorzugsweise zwischen 12 Gew.-% und 18 Gew.-% bezogen auf das Gesamtgewicht des Reaktionsgemisches beträgt.

10. Verfahren gemäß einem der Ansprüche 4 bis 9, wobei das Gemisch von Schritt (b) anfänglich 19 bis 21 Mole AA und 29 bis 31 Mole VPA jeweils pro Mol PEGMA umfasst und der pH des Reaktionsmediums auf einem pH-Wert von 8 ± 0,2 gehalten wird.

11. Verfahren gemäß einem der Ansprüche 4 bis 10, wobei der Initiator von Schritt (b) ein anorganisches Peroxid umfasst, ausgewählt aus der Liste bestehend aus Ammoniumpersulfat, Kaliumpersulfat (KPS), Natriumpersulfat, Hydroxymethansulfinsäure-Mono-Natriumsalz-Dihydrat oder einem Gemisch davon.

12. Verfahren gemäß einem der Ansprüche 4 bis 11, wobei der Initiator in einer Gewichtskonzentration innerhalb des Bereichs zwischen 0,75 Gew.-% und 1,25 Gew.-% bezogen auf das Gewicht der Reaktanten in dem Gemisch verwendet wird.

13. Verfahren gemäß Anspruch 5, wobei die kontrollierte Zugabe des Initiators in zumindest einem der Schritte (ii) und (iii) während eines Zeitraums innerhalb des Bereichs zwischen 4 Minuten und 8 Minuten und vorzugsweise innerhalb des Bereichs zwischen 4,5 Minuten und 6 Minuten durchgeführt wird.

14. Verfahren gemäß Anspruch 5, wobei der erste Zeitraum sich zwischen 25 Minuten und 35 Minuten und vorzugsweise zwischen 28 Minuten und 32 Minuten erstreckt; der zweite Zeitraum sich zwischen 45 Minuten und 55 Minuten und vorzugsweise zwischen 48 Minuten und 52 Minuten erstreckt; der dritte Zeitraum sich zwischen 70 Minuten und 85 Minuten und vorzugsweise zwischen 70 Minuten und 80 Minuten erstreckt; der vierte Zeitraum sich zwischen 3 Tagen und 6 Tagen und vorzugsweise zwischen 3,5 Tagen und 4 Tagen erstreckt.

15. Verfahren gemäß einem der Ansprüche 4 bis 14, wobei die Entfernung des freien Sauerstoffs durch Mitreißen mit einem Inertgas, vorzugsweise Stickstoff, durchgeführt wird.

## Revendications

1. - Mélange polymérique à base de polycarboxylate éther (PCE) ayant la formule générale (I) pour une utilisation dans des suspensions, 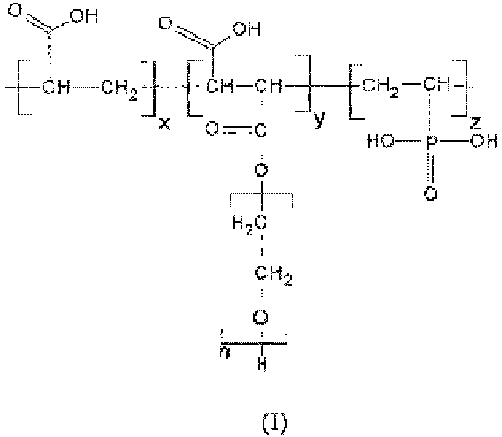 où x est un entier entre 25 et 75, y est un entier entre 1 et 3, z est un entier entre 25 et 75, et n est un entier entre 23 et 46.

2. - Mélange comprenant le mélange polymérique à base de polycarboxylate éther selon la revendication 1.

3. - Utilisation du mélange selon l'une quelconque des revendications 1 ou 2 dans des suspensions de ciment, en particulier dans des ciments d'aluminate de calcium (CAC).

4. - Procédé d'obtention d'un mélange polymérique à base de polycarboxylate éther pour une utilisation dans des suspensions, dans lequel le procédé comprend l'étape de :
b) polymérisation par radicaux libres dans un mélange comprenant de l'acide acrylique (AA), de l'acide vinyl phosphonique (VPA), et de l'ester d'anhydride maléique de polyéthylène glycol (PEGMA) comme réactifs, ledit mélange comprenant en outre de l'eau et un initiateur ; ledit mélange ayant une valeur de pH initiale se situant dans la plage entre 7,5 et 8,5 ; où tout oxygène libre est retiré du mélange tout au long de la polymérisation par radicaux libres.

5. - Procédé selon la revendication 4, dans lequel l'étape (b) comprend les étapes séquentielles suivantes :
i) agitation lors de la préparation d'un mélange comprenant de l'eau, AA, BPA et PEGMA pendant un premier intervalle de temps se situant dans la plage entre 20 et 50 minutes, conjointement avec le retrait de tout oxygène libre à partir du mélange ;
ii) addition contrôlée d'une première fraction d'initiateur dans le réacteur, et élévation de la température de réacteur jusqu'à une plage entre 45°C et 56°C et maintien de la température de réacteur dans ladite plage pendant un second intervalle de temps se situant dans la plage entre 40 et 60 minutes ;
iii) addition contrôlée d'une seconde fraction d'initiateur dans le réacteur ; élévation de la température de réacteur jusqu'à une plage entre 55°C et 65°C et maintien de la température de réacteur dans ladite plage pendant un troisième intervalle de temps se situant dans la plage entre 65 et 90 minutes ;
iv) élévation de la température de réacteur jusqu'à une plage entre 70°C et 90°C et maintien de la température de réacteur dans ladite plage pendant un quatrième intervalle de temps se situant dans la plage entre 3 jours ou plus,
les quantités d'initiateur ajoutées dans les étapes (ii) et (iii) étant arrangées de telle sorte qu'à la fin de l'addition, la quantité maximale de l'initiateur est entre 0,5 % en poids et 1,5 % en poids par rapport à la masse totale des réactifs.

6. - Procédé selon l'une quelconque des revendications 4 ou 5, dans lequel la valeur de pH initiale se situe dans la plage entre 7,8 et 8,2.

7. - Procédé selon l'une quelconque des revendications 4 à 6, dans lequel une étape (a) est effectuée avant l'étape (b), ladite étape (a) comprenant l'estérification de polyéthylène glycol (PEG) avec de l'anhydride maléique (MA) par réaction de PEG et MA dans des quantités initiales environ équimolaires dans un milieu réactionnel, le milieu réactionnel étant maintenu sous azote tout au long de la réaction.

8. - Procédé selon la revendication 7, dans lequel l'estérification dans l'étape (a) est effectuée pendant au moins 120 minutes et de préférence pendant un intervalle de temps se situant dans la plage entre 150 minutes à 240 minutes ; à une température de réacteur se situant dans la plage entre 70°C et 110°C et de préférence dans la plage entre 80°C et 100°C.

9. - Procédé selon l'une quelconque des revendications 4 à 8, dans lequel la teneur totale en réactifs dans le mélange de l'étape (b) est entre 10 % en poids et 20 % en poids, et, de préférence, entre 12 % en poids et 18 % en poids par rapport au poids total du mélange réactionnel.

10. - Procédé selon l'une quelconque des revendications 4 à 9, dans lequel le mélange de l'étape (b) comprend initialement 19 à 21 moles de AA et 29 à 31 moles de VPA par mole de PEGMA, et le pH du milieu réactionnel est maintenu à une valeur de pH de 8±0,2.

11. - Procédé selon l'une quelconque des revendications 4 à 10, dans lequel l'initiateur de l'étape (b) comprend un peroxyde inorganique choisi dans la liste consistant en le persulfate d'ammonium, le persulfate de potassium (KPS), le persulfate de sodium, le sel déshydrate d'acide hydroxyméthane sulfinique monosodique ou un mélange de ceux-ci.

12. - Procédé selon l'une quelconque des revendications 4 à 11, dans lequel l'initiateur est utilisé à une concentration massique se situant dans la plage entre 0,75 % en poids et 1,25 % en poids par rapport à la masse des réactifs dans le mélange.

13. - Procédé selon la revendication 5, dans lequel l'addition contrôlée de l'initiateur dans au moins l'une de l'étape (ii) et de l'étape (iii) est effectuée le long d'un intervalle de temps se situant dans la plage entre 4 minutes et 8 minutes, et, de préférence, dans la plage entre 4,5 minutes et 6 minutes.

14. - Procédé selon la revendication 5, dans lequel le premier intervalle de temps se situe dans la plage entre 25 minutes et 35 minutes et, de préférence, entre 28 minutes et 32 minutes ; le deuxième intervalle de temps se situe dans la plage entre 45 minutes et 55 minutes et, de préférence, entre 48 minutes et 52 minutes ; le troisième intervalle de temps se situe dans la plage entre 70 minutes et 85 minutes et, de préférence, entre 70 minutes et 80 minutes ; le quatrième intervalle de temps se situe dans la plage entre 3 jours et 6 jours et, de préférence, entre 3,5 jours et 4 jours.

15. - Procédé selon l'une quelconque des revendications 4 à 14, dans lequel le retrait d'oxygène libre est effectué par balayage avec un gaz inerte, de préférence avec de l'azote.
